# EUROPÄISCHE PATENTSCHRIFT

(11) **EP 2 922 639 B1**
(45) Veröffentlichungstag und Bekanntmachung des Hinweises auf die Patenterteilung: **06.12.2017**
(21) Anmeldenummer: 13783041.0
(22) Anmeldetag: 24.10.2013
(51) Int. Cl.: B05C 5/00, B05C 21/00, B29C 41/20, B29C 41/36, B29C 67/24

(54) **BEFÜLLVORRICHTUNG MIT EINSTELLBAREM AUFTRAGSWINKEL UND VERFAHREN ZUM BEFÜLLEN EINES BAUTEILS**
FILLING DEVICE WITH ADJUSTABLE ANGLE OF APPLICATION AND PROCESS FOR FILLING A PART.
DISPOSITIF DE REMPLISSAGE À ANGLE DE DÉPÔT RÉGLABLE ET MÉTHODE POUR REMPLIR UN ÉLÉMENT

(30) Priorität: 20.11.2012 DE 102012221175
(43) Veröffentlichungstag der Anmeldung: 30.09.2015
(73) Patentinhaber: Bayerische Motoren Werke Aktiengesellschaft, 80809 München (DE)
(72) Erfinder: HOBELSBERGER, Stefan, 84088 Neufahrn (DE)
(86) Internationale Anmeldenummer: PCT/EP2013/072258
(87) Internationale Veröffentlichungsnummer: WO 2014/079645

(56) Entgegenhaltungen:
- EP-A1- 2 474 368
- WO-A1-03/049870
- Rodrigo Coimbra: "aplicador de silicone cnc - YouTube", , 12. Dezember 2008 (2008-12-12), XP054975405, Gefunden im Internet: URL:http://www.youtube.com/watch?v=8QE1Egz kvvQ [gefunden am 2014-05-15]

## Beschreibung

Die vorliegende Erfindung betrifft eine Befüllvorrichtung gemäß Anspruch 1 sowie ein Verfahren zum Befüllen und Hinterfüllen eines Bauteiles mit einem fließfähigen Füllstoff gemäß Anspruch 7. Genauer betrifft die vorliegende Erfindung eine Befüllvorrichtung die angepasst ist zum Befüllen, Hinterfüllen oder Benetzen eines mit einem Hinterschnitt versehenen Bauteils, bei dem der Auftragswinkel und damit die Fließrichtung des Füllstoffs über eine Umlenkeinheit einstellbar ist. Die vorliegende Erfindung betrifft ferner eine Verfahren zum Befüllen und Hinterfüllen eines, einen Hinterschnitt aufweisenden Bauteils mit einem fließfähigen Füllstoff bei dem das Befüllen des Bereiches mit dem Hinterschnitt über eine in Bezug auf den Austragswinkel einstellbare Umlenkeinheit erfolgt. Selbstverständlich kann die Erfindung auch an Bauteilen eingesetzt werden, die eine andere (nicht hinterschnittene) Geometrie aufweisen.

In Stand der Technik sind unterschiedliche Anwendungsbereiche von Befüllvorrichtungen bekannt, die einen fließfähigen Füllstoff in ein Bauteil oder ein Behältnis führen. Diverse Industriezweige nutzen eine Vielzahl von Methoden um ihre Produkte und Güter mit PUR-Schaum oder dergleichen zu befüllen. Beispielsweise wird in der Verpackungsindustrie das Befüllen mit fließfähigem Füllstoff genutzt, um Boxen, Kartons, Gefäße, Dosen, Tuben und Verpackungen zu befüllen, um nur einige Anwendungsbeispiele zu nennen.

Eine andere typische Anwendung für Befüllvorrichtungen findet sich in der Automobilindustrie bzw. in der Ausstattung von Interieurteilen im Automobil. Viele der Produkte werden beispielsweise mittels eines Tiefziehprozesses in eine Form gebracht und werden zusätzlich mit einem PUR-Schaum oder einem Füllstoff aufgefüllt bzw. hinterfüllt. Diverse Grundformen benötigen aus Stabilitäts- oder Montagegründen einen Ausschäumprozess bei dem die Hohlräume vollständig zum Beispiel mit einem Polyurethanschaum befüllt werden.

Besondere Probleme entstehen dann, wenn viskoses Material als Füllstoff verwendet wird. Wird ein viskoser oder allgemein fließfähiger Füllstoff in ein Bauteil dosiert, kann beispielsweise Luft in Hohlräumen eingeschlossen werden was entweder zu einer unzureichenden Befüllung des Bauteils oder schlichtweg zum Ausschuss der Ware führt. Werden beispielsweise Lunker oder Hohlräume in Hinterschnitten erzeugt die unzureichend von Füllstoff befüllt wurden, erhält das auszufüllende Bauteil, wie z.B eine Instrumententafel nicht die erforderliche Stabilität oder kann diese an der betroffenen Stelle einfallen oder eingedrückt werden.

Ferner können prozessbedingte Schwierigkeiten auftreten, da bei unzureichender Befüllung eines Bauteils ein Überlaufen mit dem Füllstoff nicht ausgeschlossen werden kann und daneben eine Verschmutzung der Füllvorrichtung möglich ist. Diese Umstände sind bei viskosen Materialien von besonderer Bedeutung, da diese Füllstoffe aufgrund ihrer relativ hohen Oberflächenspannung dazu neigen, aneinander zu haften und an der Füllvorrichtung mit der sie in Kontakt kommen, kleben zu bleiben.

Eine weitere Schwierigkeit besteht darin, solche Formen vollständig oder ausreichend zu befüllen und/oder zu benetzen, die über Geometrien mit Hinterschnitten, insbesondere mit schwierig zu erreichenden Bereichen an Hinterschnitten zu befüllen sind. Im Stand der Technik sind beispielsweise Verfahren bekannt bei der die Füllvorrichtung mit einer hin-und her bewegbaren Düse versehen ist, um gegebenenfalls unterschiedliche Füllebenen besser befüllen zu können. So zeigt die EP 0773905 B1 eine Befüllvorrichung mit einer hin- und her bewegbaren Düse.

Aus der DE A-2610396 ist eine Vorrichtung zum dosierten Abfüllen einer, insbesonderen zäh viskosen Paste aus einem Vorratsbehälter in einen zylinderförmigen Abfüllbehälter bekannt mit einem mit dem Vorratsbehälter über eine Zufuhrleitung verbundenen Messzylinder, in dem die Paste über einen Mehrweghahn unter Druck eingeführt wird, wobei ein im Messzylinder beweglicher Messkolben mit Messkolbenstange das Abfüllvolumen festlegt, der nach Umschalten des Zwei-Wegehahns die im Messzylinder dosierte und eingefüllte Paste über eine Abgabeleitung in den Abfüllbehälter drückt. Aus der EP2474368 ist eine Vorrichtung zum dosierten Beschichten einer Oberfäche bekannt. Im Stand der Technik sind darüber hinaus solche Verfahren bekannt, bei denen eine Befüllvorrichtung über ein Auslaufrohr verfügt, aus dem Füllstoff in das zu befüllende Bauteil läuft. Nachteilig bei diesen im Stand der Technik bekannten Vorrichtungen ist insbesondere der Umstand, dass Hinterschnitte und schwierig zu erreichende Bereiche bei komplexen Bauteilgeometrien nicht von Füllstoff, welches aus dem Auslaufrohr austritt, ausreichend benetzt oder befüllt werden. In der Regel läuft der fließfähige Füllstoff senkrecht also in vertikaler Richtung aus einem an der Befüllvorrichtung bereitgestellten Mischkopf heraus. Problematisch ist dabei die Auslaufdüse oder das Auslaufrohr in die gewünschte Richtung zu drehen, da z.B. bei automatisierter Fertigung je nach Anwendungsfall nicht ausreichend Achsenfreiheitsgrade zum Drehen- und Bewegen des Mischkopfes zur Verfügung stehen oder der Mischkopf z.B. infolge seiner Geometrie nicht in die gewünschte Lage geschwenkt werden kann.

Insbesondere bei der in der Automobilindustrie zunehmenden Verwendung von Robotern stellt sich die Aufgabe, dass eine Roboter-betriebene Befüllvorrichtung durch geometrische Grenzen und beschränkte Achsenfreiheitsgrade für komplexe Bauteile nur schlecht oder überhaupt nicht verwendet werden kann.

Aufgabe der vorliegenden Erfindung ist es daher, eine Befüllvorrichtung und ein Verfahren bereitzustellen, die vorbesagte Nachteile überwinden und insbesondere dazu geeignet sind ein mit einem Hinterschnitt versehenes Bauteile mit einem fließfähigen Füllstoff zu benetzen und zu befüllen. Diese Aufgabe wird gelöst mit einer Befüllvorrichtung gemäß Anspruch 1. Grundgedanke der vorliegenden Erfindung ist es eine Befüllvorrichtung bereitzustellen, die am Mischkopf, vorzugsweise benachbart zum Auslaufrohr des fließfähigen Füllstoffs eine einstellbare Umlenkeinheit zur Änderung der Fließrichtung des fließfähigen Füllstoffes aufweist, so dass der aus dem Auslaufrohr abgelassene Füllstoff in eine bestimmungsgemäße Fließrichtung umgelenkt werden kann und insbesondere in Bereiche mit Hinterschnitten gelenkt werden kann.

Erfindungsgemäß wird daher eine Befüllvorrichtung bereitgestellt, die angepasst ist zum Benetzen und Befüllen eines mit einem Hinterschnitt versehenen Bauteils, die einen Mischkopf zum Mischen eines fließfähigen, insbesondere aushärtbaren Füllstoffs aufweist sowie am Mischkopf ein Auslaufrohr zum Zuführen des fließfähigen Füllstoffs zu oder in einen Füllraum des Bauteils und wobei ferner eine einstellbare Umlenkeinheit zur Änderung der Auslaufrichtung F in eine davon abweichende Fließrichtung F'. Hierdurch wird erreicht, dass das aus dem Auslaufrohr 4 austretende Füllmaterial in eine bestimmungsgemäße Fließrichtung F' umgelenkt werden kann. In einer einfachsten Ausführungsform kann somit unterhalb des Auslaufrohres aus dem der fließfähige Füllstoff austritt, eine einstellbare Umlenkeinheit angebracht werden mit der die Fließrichtung des Füllstoffs beeinflußt werden kann. Auf diese Weise kann der Austragwinkel des Flüllstoffs am Mischkopf eingestellt werden und es kann somit Füllstoff über die Umlenkeinheit zu Bereichen mit Hinterschnitten oder zu Hohlräumen gelenkt werden. Erfindungsgemäß kann somit über die einstellbare Umlenkeinheit das Bauteil befüllt werden. Mit Vorteil kann dies ohne das relative Bewegen des Mischkopfes gegenüber dem Bauteil erfolgen.

In einer bevorzugten Ausführungsform der Erfindung kann die Befüllvorrichtung so ausgebildet sein, dass die einstellbare Umlenkeinheit unterhalb des Auslaufrohres angeordnet ist. Hierdurch wird gewährleistet, dass ohne besondere bauliche Maßnahmen der unmittelbar aus dem Auslaufrohr austretende fließfähige Füllstoff während der Aushärtezeit zu dem gewünschten Füllraum gelenkt werden kann. Typische Prozesszeiten zum Auftragen und Befüllen liegen dabei in Bereichen von wenigen Sekunden bis etwa einer Minute. Die Befüllvorrichtung wird mit einer Verstellvorrichtung versehen, an der die Umlenkeinheit angeordnet ist, um die Orientierung der Umlenkeinheit in einer oder mehreren Raumrichtungen einstellen zu können. Besonders bevorzugt kann die Verstellvorrichtung über eine Steuereinheit abhängig von der Position des Auslaufrohres relativ zu dem befüllenden Bauraum bestimmungsgemäß in seiner Orientierung eingestellt werden. Auf diese Weise kann ohne eine Relativ-Bewegung der Befüllvorrichtung gegenüber dem Bauteil die Fließrichtung F des fließfähigen Füllstoffs zu einer gewünschten Stelle erfolgen. Erfindungsgemäß ist die Verstellvorrichtung so ausgebildet, dass die vorzugsweise daran unmittelbar befestigte Umlenkeinheit mittels Drehen oder Schwenken um einen Drehwinkel α verstellbar ist. Hierdurch wird gewährleistet, dass die Umlenkeinheit z.B. durch Drehen um einen definierten Winkel α den fließfähigen Füllstoff in der Ebene verteilen kann. Bevorzugt ist der Mischkopf ebenfalls in einer oder mehreren Raumachsen bewegbar, sodass durch Kombination der Achs- und Drehbewegungen auch komplexe Bauteilgeometrien befüllt werden können.

Weiter bevorzugt ist es, dass wenigstens ein Servomotor mit der Verstellvorrichtung gekoppelt ist, um die Umlenkeinheit und damit die Umlenkung des Füllstoffstrahles in einer oder mehreren Raumrichtungen F, F', F"vornehmen zu können.

Besonders bevorzugt ist es, wenn die Umlenkeinheit in einer beliebigen Orientierung gegenüber dem Auslaufrohr positionierbar ist, so dass auch komplexe Bauteilgeometrien mit einem statischen (d.h. nicht hin- und herverfahbaren) Mischkopf befüllt werden können. Besonders bevorzugt ist es, wenn über Hochgeschwindigkeits-Servomotoren die Verstellvorrichtungen über eine Steuereinheit gesteuert werden können.

In einer besonders bevorzugten Ausführungsform weist die Oberfläche der Umlenkeinheit eine Anti- Haftschicht auf. Dabei kann die Umlenkeinheit vollständig oder teilweise mit der Anti-Haftschicht beschichtet sein. Die Haftschicht ist dabei so auszubilden, dass die Anti-Haftwirkung bezüglich des fließfähigen Füllstoffs gegeben ist. Insofern können austauschbare Umlenkeinheiten vorgesehen sein, die mit unterschiedlichen Anti-Haftschichten versehen sind, je nachdem welcher Füllstoff verwendet wird. Sofern die Umlenkeinheit im gesamten Wirkbereich mit dem sie mit dem fließfähigen Füllstoff in Berührung kommt, mit einer Anti-Haftschicht bedeckt ist, so kann ferner an der Befüllvorrichtung eine Reinigunsvorrichtung vorgesehen werden, um in regelmäßigen Zyklen überschüssige Reste anhaftenden Füllstoffes von der Umlenkeinheit zu entfernen. Eine solche Reinigung kann beispielsweise mittels einer Lösemittelreinigung mit einer Lösemitteldüse oder mittels einer Druckluftreinigung inline erfolgen. Dies bedeutet, dass ein Reinigungsvorgang ohne Entfernen der Umlenkeinheit vorgenommen werden kann.

In einer besonders bevorzugten Ausführungsform ist die Befüllvorrichtung angepasst zur Verwendung von fließfähigem PUR-Schaum (Polyurethan-Schaum) als Füllstoff.

In einer weiter vorteilhaften Ausführungsform ist die Befüllvorrichtung dadurch gekennzeichnet, dass die Anti-Haftschicht an der Umlenkeinheit entweder als Teflonschicht oder als PP-Schicht ausgebildet ist. Teflon hat eine Antihaftwirkung gegenüber verschiedenen Füllstoffen und Klebestoffen.

Die Erfindung stellt ferner ein Verfahren zum Befüllen und/oder Hinterfüllen eines einen Hinterschnitt aufweisenden Bauteils mit einem fließfähigen Füllstoff vor, unter Verwendung der zuvor beschriebenen Befüllvorrichtungen. Erfindungsgemäß werden dabei wenigstens die folgenden Verfahrensschritte durchgeführt:
A) Bereitstellen eines Bauteils mit einem Hinterschnitt zum Befüllen und/oder Hinterfüllen mit einem fließfähigen, aushärtbarem Füllstoff;
b) Zuführen von Füllstoff zu dem Bauteil durch das Auslaufrohr;
c) Einstellen der Umlenkeinheit vor und/oder während dem Befüllen eines Bauteils derart, dass der aus dem Mischkopf herausfließende Füllstoff in seiner Fließrichtung F von der Umlenkeinheit in eine Fließrichtung F' so umgelenkt wird, dass Füllstoff in den Bereich mit dem Hinterschnitt fließt und diesen Bereich bestimmungsgemäß füllt.

Mit Vorteil wird das erfindungsgemäße Verfahren automatisiert durchgeführt, wobei das Einstellen der Umlenkeinheit mittels einer durch einen Servomotor einstellbaren Verstellvorrichtung erfolgt, die mit der Umlenkeinheit gekoppelt ist, wodurch die Verstellvorrichtung bzw. die daran angelenkte Umlenkeinheit in ihrer Orientierung automatisiert einstellbar ist.

Vorteilhafte Ausführungsformen der Erfindung sind in den Unteransprüchen angegeben und werden nachfolgend anhand des beschriebenen Ausführungsbeispiels mit Hilfe der Figuren näher erläutert. Hierbei zeigen:
- Figur 1: eine seitliche Ansicht eines Prinzipaufbaus einer erfindungsgemäßen Befüllvorrichtung;
- Figur 2: eine ähnliche Ansicht, wie in Fig.1 bei der das Befüllen eines Bauteils erläutert ist.

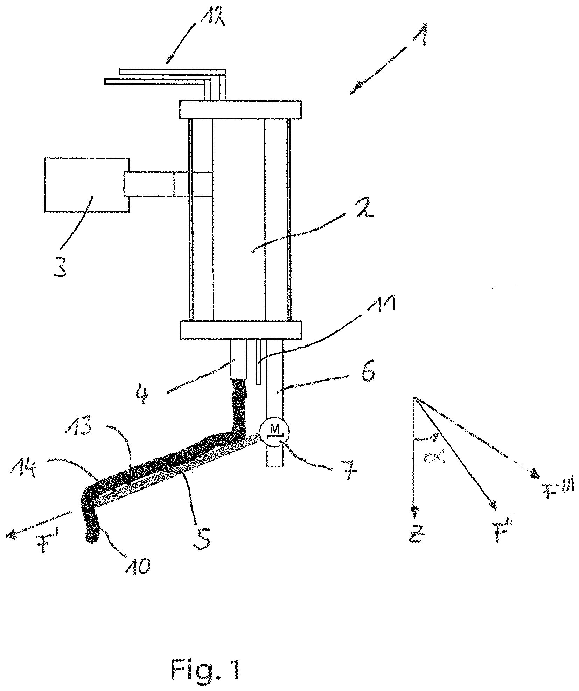

Die Figur 1 zeigt eine schematische Ansicht eines Ausführungsbeispiels einer erfindungsgemäßen Befüllvorrichtung 1 gemäß der vorliegenden Erfindung. Die Befüllvorrichtung 1 weist einen Mischkopf 2 auf. Am Mischkopf 2 ist eine Betätigungseinheit 3 angeordnet, die vorliegend so ausgebildet ist, dass sie das fließfähige Füllmaterial 10 aus dem Mischkopf 2 zu dem unten am Mischkopf 2 angebrachten Auslaufrohr 4 befördert. Die Betätigungseinheit 3 weist ferner einen Schließmechnanismus auf, welcher den Ausfluss von Füllstoff 10 aus dem Mischkopf 2 verhindert oder zulässt. Am Mischkopf 2 sind Zuführleitungen 12 zum Einbringen von entweder Füllstoffkomponenten oder Additiven vorgesehen. Das hier beschriebene Ausführungsbeispiel zeigt nur beispielhaft eine Anordnung von Zufuhrleitungen 12, der Betätigungseinheit 3 und einer Ausführung des Mischkopfs 2.

Am Mischkopf 2 befindet sich ein Auslaufrohr 4 aus dem fließfähiges, vorzugsweise aushärtbares Füllmaterial 10 appliziert werden kann. In Folge der Viskosität läuft das fließfähige Füllmaterial 10 dabei aus dem Auslaufrohr 4 heraus. Unterhalb des Auslaurohres 4 befindet sich die erfindungsgemäße Umlenkeinheit 5. Die Umlenkeinheit 5 ist in einer Raumrichtung F' ausgerichtet, so dass der Fließstoffstrahl des fließfähigen Füllstoffs 10 mittels der Umlenkeinheit 5 von der Vertikalrichtung Z in die Fließrichtung F' umgelenkt wird. In dem vorliegenden Ausführungsbeispiel weist die Umlenkeinheit an ihrer Oberfläche 13 eine Anti-Haftschicht 14 auf. Durch die Anti-Haftschicht 14 kann das Ankleben des fließfähigen Füllstoffes 10 an der Umlenkeinheit 5 weitgehend reduziert bis vollständig vermieden werden.

Die Umlenkeinheit 5 ist mit einer Verstellvorrichtung 6 verbunden. Die Verstellvorrichtung 6 kann die Orientierung der Umlenkeinheit 5 einstellen. insbesondere ist die Verstellvorrichtung 6 so ausgebildet, dass die Orientierung der Umlenkeinheit 5 in einer oder mehreren Raumrichtungen F', F", F'" erfolgen kann. Wie dies beispielhaft mit den Richtungspfeilen in Figur 1 angedeutet ist. Die Umlenkeinheit 5 ist vorliegend mittels eines Servomotors 7 mit der Verstellvorrichtung 6 gekoppelt, so dass die Umlenkeinheit 5 unter dem Polarwinkel α durch den Servomotor verschwenkt werden kann.

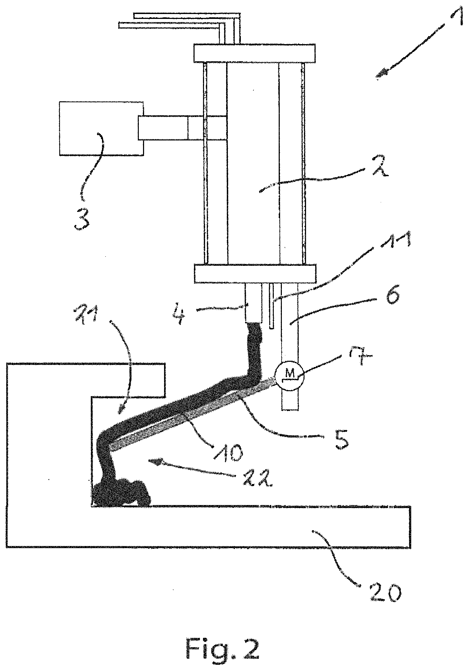

In Figur 2 ist die erfindungsgemäße Befüllvorrichtung 1 und der damit verbundene erfindungsgemäße Verfahrensschritt beim der Befüllung eines Bauteils 20 mit einem Hinterschnitt 21 gezeigt.

Gleiche Bezugszeichen in der Figur 2 weisen auf gleiche Bauteile hin, wie diese bereits in der Figurenbeschreibung zur Figur 1 angegeben sind.

Unterhalb der Befüllvorrichtung 1 befindet sich ein Teil eines Bauteils 20, wie zum Beispiel ein Teil einer Instrumententafel für ein KFZ. Das Bauteil 20 weist einen Hinterschnitt 21 auf, der einen Füllraum 22 ausbildet. Der bestimmungsgemäß mit einem Polyoretanschaum zu hinterfüllen ist. Wie in Figur 2 ersichtlich, ist es durch die erfindungsgemäße Lösung möglich, dass der in Vertikalrichtung Z auslaufende Füllstoff 10 entlang der Umlenkeinheit 5 zu dem Füllraum 22 im Bauteil 20 gelenkt wird, wodurch der Bereich mit dem Hinterschnitt 21 mit dem Füllstoff 10 gefüllt wird.

Benachbart zum Auslaufrohr 4 befindet sich eine Reinigungsvorrichtung 11, mittels der, nach Abschluss eines Befüllzyklus, die Umlenkeinheit 5 gereinigt werden kann. In dem vorliegenden Ausführungsbeispiel wird die Oberfläche mit einem Lösemittel mit Druck beaufschlagt, wodurch Reste des anhaftenden Füllstoffes 10 von der Oberfläche 13 der Umlenkeinheit 5 entfernt werden können. Erfindungsgemäß kann somit eine Reinigung erfolgen ohne die Umlenkeinheit 5 von der Befüllvorrichtung 1 wegmontieren zu müssen.

Alternativ können auch andere Anordnungen der Verstellvorrichtung 6, des Servomotors 7 oder der Reinigungsvorrichtung 11, sowie weiterer der Erfindung zugrunde liegender Bauteile kombiniert werden. So kann insbesondere auch die Verstellvorrichtung 6 über einen Rotationsantrieb verfügen, der eine Drehung um den Drehwinkel θ um die Achse in Vertikalrichtung Z ermöglicht, wodurch eine (teil)kreisförmige Drehbewegung der Umlenkeinheit 5 ermöglicht wird.

Ferner kann das Auslaufrohr 4 selbst beweglich ausgebildet sein und die Fließrichtung unmittelbar bereits über die Orientierung des Auslaufrohres 4 eingestellt werden. Alternativ kann eine Kombination aus verstellbarem Auslaufrohr 4 und Verstelleinrichtung 6 vorgesehen werden, um eine hohe Anzahl an Freiheitsgraden zu erhalten. Hierzu ist das Auslaufrohr 4 mit einem Verstellantrieb zu versehen, um dieses in die gewünschte Richtung zu orientieren und zu bewegen.

Das Auslaufrohr 4 selbst kann zusätzlich auch flexibel gestaltet werden, so, dass Kurven und Krümmungen des Auslaufrohres 4 einstellbar sind.

### Bezugszeichenliste:

- 1: Befüllvorrichtung
- 2: Mischkopf
- 3: Betätigungseinheit
- 4: Auslaufrohr
- 5: Umlenkeinheit
- 6: Verstellvorrichtung
- 7: Servomotor
- 10: Fließfähiges Füllmaterial
- 11: Reinigungsvorrichtung
- 12: Zuleitungen
- 13: Oberfläche der Umlenkeinheit
- 14: Anti-Haftschicht
- Z: Vertikalrichtung
- α: Polarkoordinate (Winkelkoordinate)
- F, F', F",F"': Raumrichtungen (Fließrichtungen)

## Patentansprüche

1. Befüllvorrichtung (1) angepasst zum Benetzen und Befüllen eines mit einem Hinterschnitt (21) versehenen Bauteils (20), die folgendes aufweist:
- einen Mischkopf (2) zum Mischen eines fließfähigen, aushärtbaren Füllstoffs (10);
- ein Auslaufrohr (4) zum Zuführen des fließfähigen Füllstoffs (10) zu oder in einen Füllraum (22) des Bauteils (20);
- wobei ferner eine einstellbare Umlenkeinheit (5) zur Änderung der Fließrichtung F des fließfähigen Füllstoff (10) so vorgesehen ist, dass der aus dem Auslaufrohr (4) austretende Füllstoffes (10) in eine bestimmungsgemäße Fließrichtung F' umgelenkt werden kann, wobei an der Befüllvorrichtung (1) eine Verstellvorrichtung (6) vorgesehen ist, um die Orientierung der Umlenkeinheit (5) in mehreren Raumrichtungen (F, F',F") einstellen zu können und die Verstellvorrichtung (6) so ausgebildet ist, dass die Umlenkeinheit (5) dreh- und schwenkbar um einen Winkel (α) von der Verstellvorrichtung (6) betätigbar ist.

2. Befüllvorrichtung (1) nach Anspruch 1, **dadurch gekennzeichnet** einstellbare Umlenkeinheit (5) unterhalb des Auslaufrohres (4) angeordnet ist.

3. Befüllvorrichtung (1) nach wenigstens einem der Ansprüche 1 oder 2 **dadurch gekennzeichnet, dass** wenigstens ein Servomotor (7) mit der Verstellvorrichtung (6) gekoppelt ist, um die Orientierung der Umlenkeinheit (5) in einer oder mehreren Raumrichtungen (F, F', F") vornehmen zu können.

4. Befüllvorrichtung (1) nach wenigstens einem der Ansprüche 1 - 3 **dadurch gekennzeichnet, dass** die Oberfläche (13) der Umlenkeinheit (5) teilweise oder vollständig mit einer Antihaftschicht (14) beschichtet ist, die eine Antihaftwirkung bezüglich des fließfähigen Füllstoff (10) aufweist.

5. Befüllvorrichtung (1) nach wenigstens einem der Ansprüche 1 -4 **dadurch gekennzeichnet, dass** die Befüllvorrichtung (1) angepasst ist zur Verwendung von fließfähigem PUR-Schaum als Füllstoff (10).

6. Befüllvorrichtung (1) nach wenigstens einem der Ansprüche 4 oder 5 **dadurch gekennzeichnet, dass** die Antihaftschicht (9) an der Umlenkeinheit (5) als Teflonschicht oder PP-Schicht ausgebildet ist.

7. Verfahren zum Befüllen und/oder Hinterfüllen eines einen Hinterschnitt (21) aufweisendes Bauteils (20) mit einem fließfähigen Füllsstoff (10) unter Verwendung einer Befüllvorrichtung (1) nach einem der vorhergehenden Ansprüchen 1 - 6 mit den folgenden Verfahrensschritten:
a. Bereitstellen eines Bauteils (20) mit einem Hinterschnitt (21) zum Befüllen oder Hinterfüllen mit einem fließfähigen, aushärtbaren Füllstoff (10);
b. Zuführen von Füllstoff (10) zu dem Bauteil (20) durch das Auslaufrohr (4);
c. Einstellen der Umlenkeinheit (5) vor und/oder während dem Befüllen des Bauteils (20) derart, dass der aus dem Mischkopf (2) herausfließende Füllstoff (10) in seiner Fließrichtung (F) von der Umlenkeinheit (5) in eine Fließrichtung (F') so umgelenkt wird, dass Füllstoff (10) den Bereich mit dem Hinterschnitt (21) gelangt und diesen Bereich füllt.

8. Verfahren nach Anspruch 7 wobei ferner das Einstellen der Umlenkeinheit (5) mittels einer, durch einen Servomotor (7) einstellbaren Verstellvorrichtung (6) erfolgt, die mit der Umlenkeinheit (5) gekoppelt ist.

## Claims

1. A filling device (1) adapted for wetting and filling a component (20) provided with an undercut (21), having the following:
- a mixing head (2) for mixing a free-flowing, curable filler (10);
- an outlet tube (4) for supplying the free-flowing filler (10) to or into a filling space (22) of the component (20);
- wherein furthermore a settable deflecting unit (5) for changing the direction of flow F of the free-flowing filler (10) is provided such that the filler (10) emerging from the outlet tube (4) can be deflected into an intended direction of flow F',
wherein an adjustment device (6) is provided on the filling device (1) in order to be able to set the orientation of the deflecting unit (5) in a plurality of spatial directions (F, F', F") and the adjustment device (6) is designed such that the deflecting unit (5) can be actuated by the adjustment device (6) in rotatable and pivotable manner through an angle (α).

2. A filling device (1) according to Claim 1,
**characterised in that** the settable deflecting unit (5) is arranged beneath the outlet tube (4).

3. A filling device (1) according to at least one of Claims 1 or 2,
**characterised in that** at least one servomotor (7) is coupled to the adjustment device (6) in order to be able to effect orientation of the deflecting unit (5) in one or more spatial directions (F, F', F").

4. A filling device (1) according to at least one of Claims 1-3,
**characterised in that** the surface (13) of the deflecting unit (5) is coated partially or completely with a non-stick layer (14) which has a non-stick action with respect to the free-flowing filler (10).

5. A filling device (1) according to at least one of Claims 1 - 4,
**characterised in that** the filling device (1) is adapted for the use of free-flowing PUR foam as filler (10).

6. A filling device (1) according to at least one of Claims 4 or 5, **characterised in that** the non-stick layer (9) is formed on the deflecting unit (5) as a Teflon layer or PP layer.

7. A method for filling and/or backfilling a component (20) having an undercut (21) with a free-flowing filler (10) using a filling device (1) according to one of the preceding Claims 1 - 6, having the following method steps:
a. providing a component (20) with an undercut (21) for filling or backfilling with a free-flowing, curable filler (10);
b. supplying filler (10) to the component (20) through the outlet tube (4);
c. setting the deflecting unit (5) prior to and/or during the filling of the component (20) such that the filler (10) flowing out of the mixing head (2) in its direction of flow (F) is deflected by the deflecting unit (5) into a direction of flow (F') such that filler (10) reaches the region with the undercut (21) and fills this region.

8. A method according to Claim 7, wherein further the setting of the deflecting unit (5) takes place by means of an adjustment device (6) which can be set by a servomotor (7), which device is coupled with the deflecting unit (5).

## Revendications

1. Dispositif de remplissage (1) adapté pour permettre de mouiller et de remplir un élément (20) ayant une contre-dépouille (21) comprenant :
- une tête de mélange (2) permettant de mélanger une masse de remplissage durcissable, fluide, (10),
- un tuyau de déversement (4) permettant de transférer la masse de remplissage fluide (10) vers ou dans un volume de remplissage (22) de l'élément (20),
- une unité de déviation réglable (5) étant en outre prévue pour modifier la direction d'écoulement (F) de la masse de remplissage fluide (10) de sorte que, la masse de remplissage (10) sortant du tuyau de déversement (4) puisse être déviée dans une direction d'écoulement convenable (F'),
- un dispositif de réglage (6) étant monté sur le dispositif de remplissage (1) pour permettre de régler l'orientation de l'unité de déviation (5) dans plusieurs directions spatiales (F, F', F") et, ce dispositif de réglage (6) étant réalisé de sorte qu'il permette de déplacer l'unité de déviation (5) par rotation et pivotement autour d'un angle (α).

2. Dispositif de remplissage (1) conforme à la revendication 1,
**caractérisé en ce que**
l'unité de déviation réglable (5) est montée au-dessous du tuyau de déversement (4).

3. Dispositif de remplissage (1) conforme à au moins l'une des revendications 1 et 2,
**caractérisé en ce qu'**
au moins un servomoteur (7) est couplé au dispositif de réglage (6) pour permettre d'orienter l'unité de déviation (5) dans une ou plusieurs directions spatiales (F, F', F").

4. Dispositif de remplissage (1) conforme à au moins l'une des revendications 1 à 3,
**caractérisé en ce que**
la surface (13) de l'unité de déviation (5) est totalement ou partiellement revêtue d'une couche antiadhésive (14) qui exerce une action antiadhésive sur la masse de remplissage fluide (10).

5. Dispositif de remplissage (1) conforme à au moins l'une des revendications 1 à 4,
**caractérisé en ce qu'**
il est adapté pour l'utilisation de mousse de polyuréthane (PUR) fluide en tant que masse de remplissage (10).

6. Dispositif de remplissage (1) conforme à au moins l'une des revendications 4 et 5,
**caractérisé en ce que**
la couche anti adhésive (9) est formée sur l'unité de déviation (5) sous la forme d'une couche de téflon ou de polypropylène (PP).

7. Procédé permettant de remplir et/ou de combler un élément (20) comportant une contre-dépouille (21) avec une masse de remplissage fluide (10) en utilisant un dispositif de remplissage (1) conforme à l'une des revendications précédentes comprenant les étapes suivantes consistant à :
a. se procurer un élément (20) ayant une contre-dépouille (21) à remplir ou combler avec une masse de remplissage durcissable fluide (10),
b. transférer la masse de remplissage (10) vers l'élément (20) par le tuyau de déversement (4),
c. régler l'unité de déviation (5) avant et/ou pendant le remplissage de l'élément (20) de sorte que la direction d'écoulement (F) de la masse de remplissage (10) sortant de la tête de mélange (2) soit déviée par l'unité de déviation (5) dans une direction d'écoulement (F') de sorte que cette masse de remplissage (10) parvienne à la zone équipée de la contre-dépouille (21) et remplisse cette zone.

8. Procédé conforme à la revendication 7, selon lequel le réglage de l'unité de déviation (5) est en outre effectué à l'aide d'un dispositif de réglage (6) pouvant être réglé par un servomoteur (7) qui est couplé à l'unité de déviation (5).
